(19) Europäisches Patentamt

European Patent Office

Office européen des brevets

(11) Veröffentlichungsnummer: **0 326 621**
**A1**

(12) **EUROPÄISCHE PATENTANMELDUNG**

(21) Anmeldenummer: **88101351.0**

(22) Anmeldetag: **30.01.88**

(51) Int. Cl.⁴: **A23P 1/14 , A23L 1/211 , A23K 1/14**

(43) Veröffentlichungstag der Anmeldung:
**09.08.89 Patentblatt 89/32**

(84) Benannte Vertragsstaaten:
**BE DE FR GB IT NL SE**

(71) Anmelder: **Schumacher, Heinz**
**Höperfeld 26**
**D-2050 Hamburg 80(DE)**

(72) Erfinder: **Schumacher, Heinz**
**Höperfeld 26**
**D-2050 Hamburg 80(DE)**

(74) Vertreter: **Glaeser, Joachim, Dipl.-Ing. et al**
**Patentanwalt Königstrasse 28**
**D-2000 Hamburg 50(DE)**

(54) Verfahren und Anlage zur Qualitätsverbesserung von Nahrungs- und/oder Futtermitteln durch gleichzeitige Aktivierung und Entkeimung bzw. Entgiftung von pflanzlichen und tierischen, insbes. fett- und /oder ölhaltigen Rohstoffen bzw. bereits entölten oder entfetteten Produkten.

(57) Verfahren und Vorrichtung zur Qualitätsverbesserung von als Nahrungs- oder Futtermittel vorgesehenen fett- bzw. ölhaltigen pflanzlichen Rohmaterialien (FCM) oder deren Rückstände. Durch thermische Behandlung in Gegenwart von Wasser oder Wasserdampf wird im kontinuierlichen Prozeß das Material in einer ersten Stufe mit einer Temperatur von ca. 100°C in einen Druck-Behandlungsraum (4) eingebracht und verbleibt dort ca. 3,5 - 10 Min. bei Temperaturen von max. 135°C und einem Druck von max. 5 Bar. In einem zweiten Behandlungsraum (8) entspannt das Material auf 0,1 - 1,0 Bar und wird von dorther nach einer Verweilzeit von ca. 30 Sek. mit einer Temperatur von unter 100°C abgezogen.

Fig.2

EP 0 326 621 A1

# VERFAHREN UND ANLAGE ZUR QUALITÄTSVERBESSERUNG VON NAHRUNGS- UND/ODER FUTTERMIT-TELN DURCH GLEICHZEITIGE AKTIVIERUNG UND ENTKEIMUNG BZW. ENTGIFTUNG VON PFLANZLICHEN UND TIERISCHEN, INSBES, FETT- UND/ODER ÖLHALTIGEN ROHSTOFFEN BZW. BEREITS ENTÖLTEN ODER ENTFETTETEN PRODUKTEN.

Nahezu alle Rohstoffe, die für die Gewinnung von Fetten und Ölen für den Nahrungsmittelsektor geeignet sind, z.B. palimitinsäurereiche Öle (Baumwollsaatöl, Kapok-, Kürbis- und Maiskeimöl); öl-und linolsäurereiche Öle (Sonnenblumen-, Sesam-, Lein- und Bucheckern Öle); Leguminoseöle (Soja- und Erdnußöl); sowie Cruciferenöle, z.B. Rüböl, sind wegen ihres hohen Anteils an unterschiedlichen Fetten und Ölen nicht nur für die Ölgewinnung von Interesse, sie bilden auch vielfach eine hervorragende Grundlage für Tierfutter, insbes. Kraft- und Mischfutter. Dies aufgrund des zusätzlichen Gehalts an Eiweiß und ggf. Stärke sowie weiterer Inhaltsstoffe wie Vitamine u.a.

Dies gilt nicht nur für das fett- und ölreiche Rohmaterial, es trifft in gleichem Maße auch zu für die nach der Fett- bzw. Ölabtrennung durch Pressen und/oder Extraktion verbleibenden Rückstände, das sogenannte fett- bzw. ölfreie Schrot, das - wenn auch fett- bzw. ölfrei - ein begehrtes Futtermittel darstellt und nach einer spezifischen thermischen Behandlung (Toasten) vielfach direkt verwertet werden kann.

In Abhängigkeit von unterschiedlichen, in den meisten Fällen spezifischen Behandlungsmethoden, die der Vorbereitung bzw. Konditionierung dienen, lassen sich somit aus den genannten pflanzlichen Rohstoffen sowohl fett- bzw. ölhaltige - ohne nach folgende Ölabtrennung - als auch fett- bzw. ölfreie - nach erfolgter Pressung und/oder Extraktion - Nahrungs- und Futtermittel gewinnen.

Während jedoch einige Rohmaterialien bei der Aufbereitung zu Futtermitteln keine Probleme aufwerfen oder in einfachster Weise durch eine Wärmebehandlung ggf. in Verbindung mit einer Wasserdampfbehandlung, z.B. in Wärmepfannen, Toastern oder Expandern (vgl. DE 3529229) konditioniert bzw. in ihrer Qualität veredelt werden können, sind vor allem bei den palmitinsäurereichen Rohmaterialien wie Baumwollsaat oder bei Cruciferaen wie Raps, Rübsen, Senf u.a. erhebliche Schwierigkeiten insbes. im Hinblick auf Verträglichkeit, Toxizität, Lagerstabilität usw. zu überwinden.

Ursache sind vielfach sehr spezifische Begleitstoffe im genannten Rohmaterial, die bei anderen Rohstoffen nicht oder nur in untergeordneten Mengen vorhanden sind.

Bei Raps oder Rübsen sind von besonders schwerwiegender Bedeutung die schwefelhaltigen Glucosinolate, die beim Verzehren durch das Tier durch enzymatische Hydrolyse toxische Isothiocyanate freisetzen. Die Glucosinolate bilden charakteristische Inhaltsstoffe der Senföle, insbes. Allylsenföl, die nicht nur gesundheitliche Schäden wie verminderten Appetit, Vergrößerung der Schilddrüse u.a. verursachen, sondern auch durch den allen Senfölderivaten eigenen, scharfen, beißenden Geruch oder Geschmack zur Ablehnung des Futtermittels durch das Tier führen.

Ähnlich verhält es sich mit Baumwollsaat. Diese enthält ein toxisches Polyphenol, das Gossypol, ein Bi-Naphthalin-Derivat, das für Menschen und Nicht-Wiederkäuer in gleichem Maße stark giftig ist. Das Gossypol ist in gefärbten Körnchen im Samen-Endrosperm eingebettet und äußerst schwierig abzutrennen. Eine Möglichkeit - bisher die einzige - bietet die Suspension der zerkleinerten Saaten in Hexan. Mit Hilfe von Flüssigkeitszyklonen wird in einem sehr aufwendigen Prozeß anschließend eine schwere, mit Gossypol angereicherte Fraktion abgetrennt.

Zu erwähnen sei in diesem Zusammenhang auch das Aflatoxin, eine toxische Substanz aus dem Schimmelpilz Aspergillus flavius, der insbes. in warmem und feuchtem Klima auftritt. Der Pilz ist ein allgemeines Problem bei allen tropischen Ölsamen, insbes. bei der Erdnuß, wenn diese nicht gleich nach der Ernte getrocknet wird. Das Aflatoxin bzw. die Aflatoxine gehören zu den stärksten, natürlich vorkommenden Giften. Sie sind, außer bei Erdnüssen, auch in Mais, Reis, Getreide, Mohn und Paranüssen nachgewiesen. Sie sind luft-, licht- und wasserdampfempfindlich, so daß sich hieraus eine Möglichkeit der Isolierung bzw. Zerstörung ergibt, d.h. die Abtötung des Schimmelpilzes Aspergillus flavius. Auf die häufige Anwesenheit von Salmonellen z.B. in Fischmehl sei ergänzend hingewiesen.

Es ist Aufgabe der Erfindung, ein Verfahren und eine Anlage zur Durchführung dieses Verfahrens bereitzustellen, bei dem solche für Futter- oder Nahrungsmittel geeignete fett- und/oder ölhaltige Rohstoffe, die, wie beispielsweise Raps, Rübsen, Senf, Baumwollsaat, Mais, Erdnüsse, Fischmehl und andere, toxische Begleitstoffe wie Glucosinate, Polyphenole, Schimmelpilze, Salmonellen - um nur die wichtigsten zu nennen - enthalten oder daraus herleitbare toxische Folgeprodukte bilden, in einem Mehrstufenprozeß thermischer Behandlung von diesen Begleitstoffen bzw. deren Folgeprodukten weitgehend oder ganz zu befreien; zumindest aber in dem Maße zu reduzieren, daß Toxizität, Befall von Schimmelpilzen sowie geruchs- und geschmacksspezifische Negativeigenschaften eliminiert werden.

Durch das neue Verfahren soll somit erreicht werden, daß das erfindungsgemäß behandelte Material entweder bei vollem Fett- bzw. Ölgehalt oder - als Alternative - als sogenanntes Öl- bzw. fettfreies Schrot (z.B. Rückstand nach der Fett- bzw. Ölabtrennung), bei Beibehaltung aller ernährungsphysiologischen Eigenschaften, ohne Gefahr vergiftender Wirkung und ohne Aufnahmebeeinträchtigung (Ablehnung) durch Geruch und Geschmack, als Futter- oder Nahrungsmittel geeignet sind.

Gelöst wird diese Aufgabe dadurch, daß das fett- bzw. ölhaltige Material (FCM) oder - wahlweise -das fett- bzw. ölfreie Material (FFM) in einer ersten Verfahrensstufe mit einer Temperatur von ca. 98 - 105° C in einen unter Druck (Hochdruck-Dampfatmosphäre) stehenden ersten Behandlungsraum eingebracht, in diesem während einer Zeit von ca. 3,5 - 10 Min. in kontinuierlichem Durchfluß bei Temperaturen von max. 135° C gehalten, anschließend in einem zweiten Behandlungsraum spontan auf 0,1 - 1 Bar entspannt und nach einer Verweilzeit von ca. 20 - 40 Sek. bei weiter kontinuierlichem Durchlauf aus der zweiten Behandlungszone abgezogen wird.

Überraschenderweise hat sich gezeigt, daß bei dieser Verfahrensweise sowohl in FCM-Material als auch FFM-Material praktisch keine Glukosinolate sowie kein meßbares Gossypol zu finden ist, daß Schimmelpilze vollkommen eliminiert sind und daß die Verwertung beeinträchtigende Geruchs-und Geschmacksstoffe ausgetrieben worden sind.

Aus der DE-A-2313224 ist bereits ein Verfahren bekannt, bei dem fett- bzw. ölhaltiges Material, im speziellen Falle Rapssamen, im Wirbelbett durch Wasserdampf fluidisiert wird, wobei das Gut über eine geneigte, durchlöcherte Fläche dem aufwärtsströmenden Wasserdampf entgegenfließt. Das bekannte Verfahren liefert ein für die Ölabtrennung vorbehandeltes Produkt, dessen Myrosinase-Aktivität (Spaltung der Glucosinolate in Zucker und Senföl) erheblich reduziert ist, so daß eine Teilaufgabe erfüllt wird. Über Geruchs- und Geschmackseigenschaften liegen keine Angaben vor, vielmehr ist zu erwarten, daß derartige unerwünschte Begleitstoffe in das anschließend extrahierte Öl übergehen. Weiter ist durch das allmähliche Eindringen des verwendeten Heiz- bzw. Fluidisierungs-Dampfes in die langsam abrutschende Masse die Gefahr der Überhitzung - und dies in luft-bzw. sauerstoffhaltiger Atmosphäre, die unerwünschte Oxydations reaktionen fördert bzw. katalysiert - nicht zu vermeiden. Schließlich wird offensichtlich ein großer Anteil des eingespeisten, z.B. 190° heißen Dampfes beim gegebenen Druck von z.B. 6,3 Bar die Anlage ungenutzt durchströmen. Das bekannte Verfahren ist ausschließlcih für die Vorbehandlung von Raps oder Rübsen für die anschließende Extraktion (Ölgewinnung) vorgesehen und kommt u.a. für die Behandlung von (Extraktionsrückstand (Schrot) kaum in Frage.

Die EP-A-0148143 beschreibt ein Verfahren zur Erhöhung der Milchproduktion von Kühen, wobei insbes. Rapssaat nach der Reinigung während 20 - 60 Min. nach Zusatz von Wasser auf 65 - 85° C erhitzt wird, damit sich ein Wassergehalt von 10 - 16% einstellt. Anschließend wird weitere 20 - 60 Min. bei erneuter Wasserzugabe auf 80 - 100° C erhitzt (Wassergehalt 14 - 18%), wonach das Material zerkleinert wird. Als Anlage für die Verfahrensdurchführung dient eine Reihe von Behältern mit sich über den gesamten Querschnitt der Behälter erstreckendem Auslaß.

Es versteht sich, daß das bei max. 100° C in offener Atmosphäre (Luft bzw. Sauerstoff) durchgeführte Verfahren die erforderliche Unschädlichmachung von z.B. Gossypol, Schimmelpilzen usw. nicht erreichen kann, wenn auch die Angabe zur Qualität eine starke Verminderung der Myrosinase-Aktivität anzeigt. Die übrigen, notwendigen Qualitätsverbesserungen, insbes. Verbesserung des Geruchs und des Geschmacks, die Beeinflussung des Trypsinfaktors, die Verhinderung oxydativer Nebenwirkungen werden trotz der äußerst langen Behandlungszeit von zweimal 20 - 60 Min. bei 100° C kaum erfaßt.

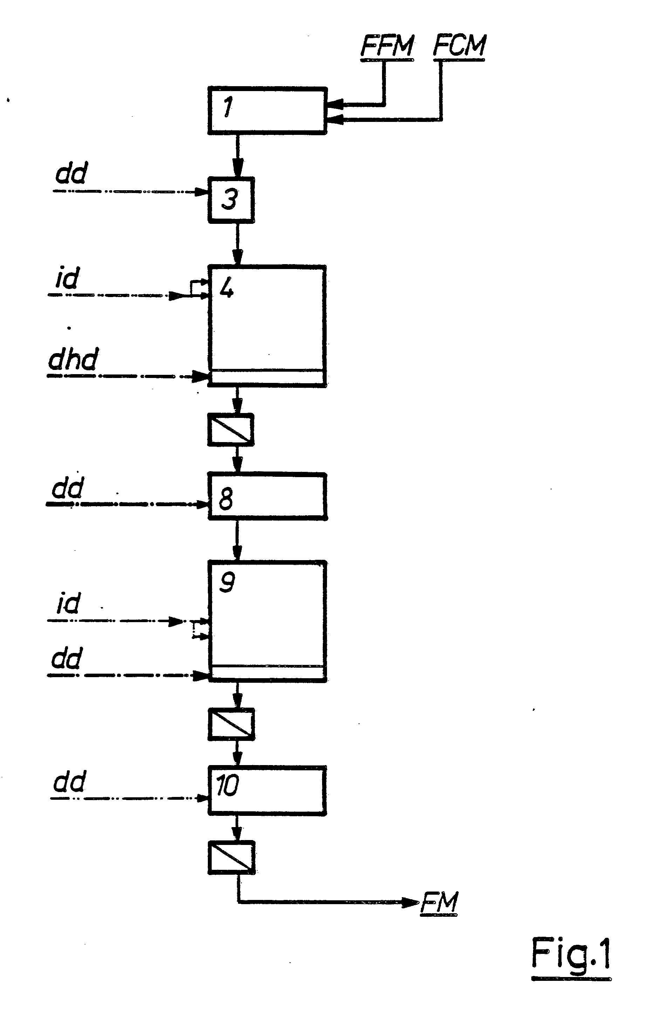

Für das erfindungsgemäße Verfahren gelten die folgenden, entscheidenden Merkmale bzw. Verfahrensschritte (vgl. auch Fig. 1):

(a) Das vorgewärmte Material (FFM; FCM)wird in die unter einem Druck von z.B. 5 Bar gehaltene Behandlungsstufe eingebracht. Der Vorgang ist kontinuierlich. Dabei erfährt das Material eine spontane Druckerhöhung in Gegenwart von Wasserdampf (Direktdampf) (dhd), verbunden mit einer ebenfalls spontanen Temperaturerhöhung auf max. 135° C.

Diese schockartigen Maßnahmen umgehen zeitraubende und das Material im negativen Sinne beeinflussende Druck- und Temperature-Aufbauperioden, so daß bestimmte Wertstoffe, wie Vitamine, aber auch Glyceride, Peptide, Stärke usw., kaum verändert oder abgebaut werden. Dies ist von besonderer Bedeutung für FCM-Material, das noch keine thermische Behandlung erfahren hat; dies gilt aber auch in gleichem Maße für FFM-Material, vor oder im Anschluß an einen Toastungsprozeß.

(b) Die schlagartige Entspannung des Materials von z.B. 5,0 Bar auf 0,1 - 1 Bar (abs.) von (4) in (9). Hierdurch wird der hydrothermale Behandlungsprozeß sofort unterbrochen, und die in diesem Augenblick vorhandenen Produkteigenschaften werden stabilisiert.

(c) Die vollkommen kontinuierliche Verfahrensweise in einem absolut geschlossenen System, das vom Materialeintritt bis zur Materialentnahme eine luft- bzw. sauerstoffreie Atmosphäre aufweist, schließt jegliche Oxydationsreaktionen aus.

3

(d) Das Verfahren ist äußerst flexibel, da die einzelnen Parameter wie Druck, Temperatur, Verweilzeit, Direktdampfmenge usw. gesteuert und dem jeweiligen Material bzw. dessen Provenienz angepaßt werden können.

In Verbindung mit Figur 1 wird das erfindungsgemäße Verfahren in seinem prinzipiellen Anlagen- und Betriebsgang nachfolgend beschrieben:

Das zu verarbeitende Material kommt entweder von einem Toaster oder Entbenzinierer als fett- und ölfreies Material (FFM) oder von Ölpressen wie Rapskuchen usw., also ebenfalls fett- und ölfrei (FFM); oder das Material kommt fett- und ölhaltig (FCM) von Wärmepfannen, Wärmeaustauschern usw., wobei in bekannter Weise eine Reinigung und Brechnung vorausgeht.

In allen Fällen wird das Material zunächst auf eine Temperatur von ca. 98 - 105° C aufgewärmt - wobei diese Temperatur beim getoasteten Material vielfach bereits vorhanden ist - und in einem Bunker (1) mit Bodenabzug gelagert. Aus diesem gelangt das Gut, ggf. under Einschaltung eines Wiege- und Förderaggregats (3), kontinuierlich in die erste Verfahrensstufe(4), die sogenannte Druckstufe. Die Wiege- und Fördereinrichtung (3) wird mit Direktdampf (dd) beschicht.

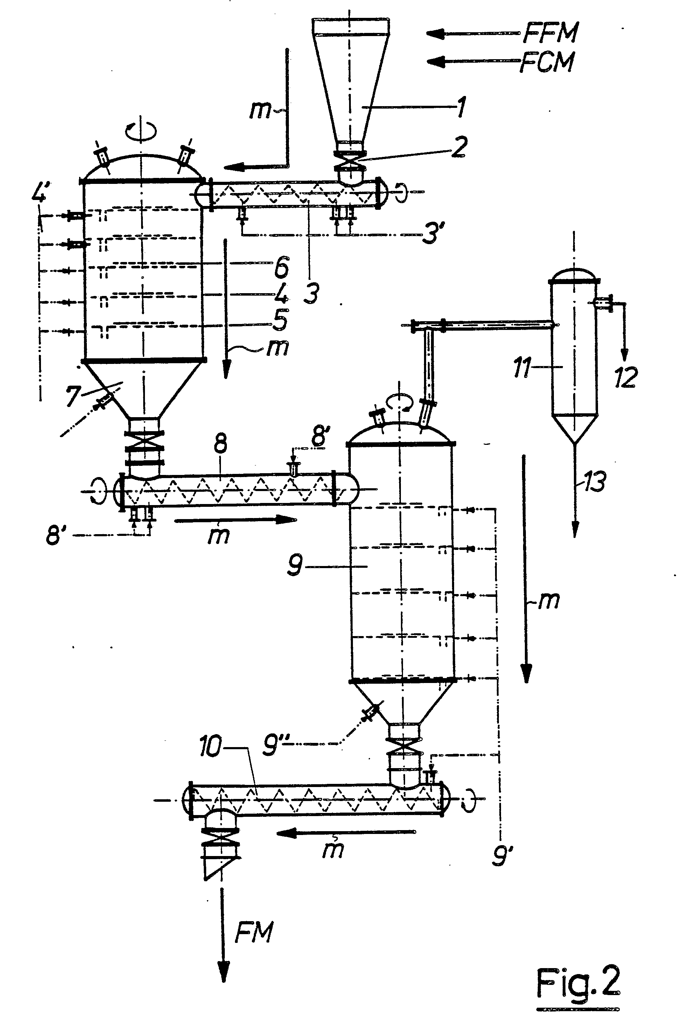

Die Druckstufe (4), die weiter unten in ihrer bevorzugten Ausführungsform in Verbindung mit Fig. 2 beschrieben wird, arbeitet kontinuierlich mit bevorzugtem Materialfluß von oben nach unten. Im unteren Bereich der Vorrichtung (4) wird Hochdruckwasserdampf (dhd) eingeführt, der dem Material nach oben entgegenströmt. Sofern die Druckstufe (4) - was im übrigen bevorzugt ist - ein Mehrbödenaggregat darstellt, werden diese Böden zweckmäßig indirekt mit Dampf (id) beheizt.

Über ein geeignetes Abschlußsystem gelangt das heiße Material im weiterhin kontinuierlichen Fluß in ein weiteres Förderaggregat (8), das ebenfalls mit Direktdampf beschicht wird und bevorzugt unter Druck- und Temperaturbedingungen der Druckstufe (4) steht. Dieses Aggregat (8) entsprannt das Material in eine zweite Stufe (9) auf atmosphärischen oder auch unteratmosphärischen Druck.

Die Vorrichtung der zweiten Stufe (9) kann ähnlich oder gleich der Druckstufe (4) ausgebildet sein. Sind Böden vorhanden, so werden auch diese bevorzugt durch Dampf indirekt beheizt (id). Direkt-Dampf (dd) wird auch hier dem Material von unten nach oben entgegengeführt, um eine durchgehende Dampfatmosphäre zu erreichen. Schließlich wird unter Zwischenschaltung geeigneter Abschlußelemente über Transporteinrichtungen (10), die ebenfalls direkt (dd) mit Dampf beschickt werden, das Fertigprodukt kontinuierlich abgezogen (FM).

Wie Figur 2 zeigt, ist die sogenannte Druckstufe (4) bevorzugt als Mehretagen-Druckbehälter mit perforierten ggf. zusätzlich indirekt beheizten, Böden (5) und zentraler Achse mit Rührelementen (6) ausgerüstet.

Derartige Einheiten sind aus der chemischen Verfahrenstechnik bekannt, z.B. als Wärmepfannen, als Wirbelschicht- und Fließbettreaktoren, als Trockner, Kühler, Reaktoren usw. Entscheidend ist, daß das Material bei seinem Weg von oben nach unten bei einem Druck von ca. 5 Bar einer Temperatur bis zu ca. 135° C ausgesetzt ist, daß eine (Direkt-)Wasserdampfatmosphäre vorliegt, und daß die Verweilzeit ca. 3,0 - 10 Min. beträgt.

Der Direktdampf (dhd), der als Sattdampf oder überhitzter Dampf von ca. 6 - 12 Bar im untersten Bereich (7) der Druckstufe (4) eingespeist wird, durchströmt das Gut von Boden zu Boden, dabei die vorgegebene Temperatur bei gegebenem Druck und Wasserdampfatmosphäre konstant haltend.

Nach einer Verweilzeit von ca. max. 10 Min., entsprechend der Verweilzeit in (4), wird das Material z.B. durch eine insbesondere als Expander ausgebildete Förderschnecke (8) abgezogen, wobei diese Schnecke bevorzugt gleiche Druck-/Temperatur-Bedingungen aufweist wie das Druckaggregat (4). Die Schnecke (8) entspannt das Material in die zweite Stufe (9) auf Atmosphärendruck oder auch unteratmosphären Druck, d.h. auf einen Druckbereich von 0,1 - 1,0 Bar.

Auch die Vorrichtung der Zweiten Stufe (9) kann Lochböden und Rührwerk aufweisen, wie etwa für die erste Stufe (4) abgeleitet; sie kann aber auch als leerer Behälter konstruiert sein, der Möglichkeiten der Produktbewegung nach unten aufweist. Der Behälter (9) weist naturgemäß eine kleinere Volumenkapazität auf als (4), bedingt durch die geringere Verweilzeit des Materials. Bevorzugt ist auch dieser Behälter (9) - genauso wie die Förderaggregate (3) und (8) - mit Direktdampf (3´,8´,9´) beaufschlagbar. Außerdem ist die zusätzliche Einbringung von Direktdampf am Boden des Behälters (9) über (9´´) vorgesehen.

Die beim spontanen Druckabfall beim Übergang von der Druckzone (4,8) in die zweite Stufe (9) aus dem nunmehr entspannten Material frei werdenden gasförmigen Bestandteile wie Feuchtigkeit, ggf. Lösemittelreste sowie Zersetzungsprodukte durch die Behandlung in der ersten Zone (4 ), entweichen aus dem Behälter bzw. Stufe (9) und werden über eine Vorlage, insbes. einen Zyklon (11) bei (13) abgezogen. Bevorzugt ist die Vorlage (11) mit einem Vakuumstrahler oder einer Vakuumpumpe (12) verbunden, um in (9) ggf. unteratmosphärischen Druck zu erzeugen.

4

Ebenfalls kontinuierlich wird das schockartig entspannte und damit stabilisierte Material über ein Förderaggregat, insbes. eine Schnecke (10) aus (9) abgezogen (FM) und der Weiterverwertung (z.B. Kühlung, weitere Trocknung, Konditionierung, Konfektionierung, Lagerung usw.) zugeführt. Der Verlauf der Materialbehandlung ist in der Figur vom Bunker (1) bis zum Verlassen der Anlage durch Pfeile (m) angezeigt.

Wie ersichtlich, sind alle Anlagenteile mit Direktdampf ((dd) in Fig. 1) beschickt. Dies ist erforderlich - und gilt als weiteres Merkmal der Erfindung - um eine absolut luft- bzw. sauerstofffreie Atmosphäre zu gewährleisten, damit Oxydationsreaktionen ausgeschlossen sind. Es liegt also vom Beginn der Behandlung bis zu ihrem Abschluß eine totale Dampfatmosphäre vor. Diese wird in (3, 9 und 10) durch Dampf von max. 3 Bar über die Zuleitungen (3', 9'' und 9') aufrechterhalten, während die erste oder Druckstufe (4) und das ebenfalls unter Hochdruck stehende Förderelement (8) über (7 und 8') mit Hochdruckdampf beschickt werden.

In der Figur sind die einzelnen Apparateteile schematisch als vertikale Rührbehälter mit bezeizbaren (4', 9') Lochböden und die Förderelemente (3, 8, 10) als Forderschnecken ausgewiesen. Das Verfahren ist jedoch an diese Art Vorrichtungen nicht gebunden, wenn die erforderlichen, variablen Behandlungsbedingungen von Temperatur, Druck, Verweilzeit, Direktdampfatmosphäre und Materialbewegung realisierbar sind.

Dies gilt insbesondere für die Förderelemente (3, 8, 10), für die sich sogenannte Expander (vgl. z.B. DE 3529229) besonders bewährt haben, dies speziell für das Förderelement (8), das den Übergang von der Hochdruckstufe (4) zur Entspannungsstufe (9) bewältigt.

Beispiel 1 (FFM-Material)

Ein durch Quetschen und Warmpressen sowie anschließende Extraktion mit Hexan erhaltener, entbenzinierter Rückstand von Rapssaat (Rapsschrot) wurde in einer technisch betriebenen Versuchsanlage gemäß der Erfindung behandelt.

| Ausgangsmaterial: | | |
|---|---|---|
| Eigenwassergehalt | = | 7,18 Gew.-% |
| Myrosinase Aktivität | = | 90*) |
| PDI-Zahl | = | ca. 45**) |
| Hexan | = | ca. 220 ppm |
| Geruch und Geschmack insges. | = | bitter bis scharf |
| Proteingehalt ges. | = | 40,5 Gew.-% |
| Fettgehalt (ges.) | = | 1,2 Gew.-% |

| Verfahrensbedingungen (vgl. Figur 2) | | |
|---|---|---|
| (a) | Temperatur in (1): | 104 °C |
| (b) | Temperatur in (4): | 131 - 132 °C |
| | Druck in (4): | 4,2 Bar |
| | Verweilzeit in (4): | 4,5 Min. |
| (c) | Temp./Druck in (8): | wie bei (4) |
| | Verweilzeit in (8): | ca. 30 Sek. |
| (d) | Temperatur in (9): | 94 °C |
| | Druck in (9): | 0,4 Bar |
| | Verweilzeit in (9): | ca. 25 Sek. |

| Endprodukt (FM): | | |
|---|---|---|
| Eigenwassergehalt | = | 10,85 Gew.-% (aus (10)) |
| Hexan | = | nicht messbar |
| Geruch und Geschmack | = | absolut neutral |
| Proteingehalt | = | 39,85 Gew.-% |
| PDI-Zahl | = | ca. 10 |
| Myrosinase Aktivität | = | 0,0 |
| Lagerstabilität | = | nach 6 Wochen bei hygroskopischem Gleichgewicht: locker, geruchsfrei, ohne Farbveränderung |

Beispiel 2 (FCM-Material):

| Ausgangsmaterial: Rapssaat, getrocknet (Brassica napus L.) | | |
|---|---|---|
| Rohproteingehalt | = | ca. 23,5 Gew.-% |
| Fettgehalt | = | ca. 42,15 Gew.-% |
| Eigenwassergehalt | = | ca. 11,80 Gew.-% |
| PDI-Zahl | = | 95 |
| Myrosinase Aktivität | = | 99 |
| Form und Aussehen | = | kugelig, glatt, dunkelbraun |
| Durchmesser | = | ca. 1,5 - 2,4 mm |
| Geruch und Geschmack (gebrochen) | = | bitter bis ranzig |

| Verfahrensbedingungen (vgl. Figur 2) | | |
|---|---|---|
| (a) | Temperatur in (1): | 98 °C (aufgeheizt) |
| (b) | Temperatur in (4): | 134 °C |
| | Druck in (4): | 4,9 Bar |
| | Verweilzeit in (4): | 6,5 Min. (c) |
| | Temp./Druck in (8): | 133 °C/4,8 Bar |
| | Verweilzeit in (8): | ca. 30 Sek. (d) |
| | Temperatur in (9): | 98 °C |
| | Druck in (9): | 0,9 Bar |
| | Verweilzeit in (9): | ca. 25 Sek. |

| Endprodukt (FM): | | |
|---|---|---|
| Eigenwassergehalt | = | 9,45 Gew.-% |
| Geruch und Geschmack | = | neutral |
| Proteingehalt | = | 40,01 Gew.-% |
| PDI-Zahl | = | ca. 20 |
| Myrosinase Aktivität | = | 0,0 |
| Lagerstabilität | = | unter den Bedingungen des hygroskopischen Gleichgewichts keine Veränderung |

*) Myrosinase Aktivität: ermittelt in den kolorimetrischen Grenzwerten 0,0 - 100,0 für Thiozyanationen. 0,0 = farblos bzw. klar, d.h. keine Myrosinase Aktivität.

**) PDI-Zahl (Protein Dispersibility Index) = meßbare Menge des in Lösung gegangenen Stickstoffs; hohe PDI-Zahl = hohe Wasserlöslichkeit der Proteine.

Wie aus den Beispielen ersichtlich, ändert sich der Wassergehalt des Materials vom Eintritt in die Anlage als FFM oder FCM bis zum Abschluß der Behandlung als FM innerhalb gewisser Bereiche. Hierfür ist im Prinzip die Wasserdampfatmosphäre im System verantwortlich, die ja vom Element (3) - Fig. 1 - bis zum Anlagenausgang bei (10) aufrechterhalten bleibt. Der Wasserdampf wird hierzu in praktisch jedes Einzelaggregat des Gesamtkomplexes eingeleitet. Es versteht sich, daß insbesondere im laufenden Betrieb, d.h. wenn die Anlage eine bestimmte Temperatur erreicht hat, der Wasserdampf durch Wasser selbst, zumindest partiell ersetzt werden kann, was beispielsweise über Einspritzdüsen erfolgt. Auch bei Verwendung anderer Wärmeenergie, z.B. elektrische Energie für die Beheizung der Böden etwa der Elemente (4) und (9) könnte der Wasserdampf in diesen Einrichtungen partiell oder auch ganz durch Frischwasser ersetzt werden. Dies ist allein eine Frage der Anlageneffizienz bzw. Wirtschaftlichkeit, wobei das Mengenverhältnis Dampf zu Wasser - unter Aufrechterhaltung der Hochdruckbedingungen in (4) und (8) - Fig. 1 - in Abhängigkeit von den Materialeigenschaften und von zu erzielenden Endwassergehalt des Materials abhängig ist.

## Ansprüche

1. Verfahren zur Qualitätsverbesserung von als Nahrungs- oder Futtermittel vorgesehenen fett-bzw. ölhaltigen pflanzlichen Rohmaterialien (FCM) oder der aus diesen nach der Fett- bzw. Ölabtrennung erhaltenen Rückstände, Schrot (FFM), durch thermische Behandlung in Gegenwart von Wasser oder Wasserdampf im kontinuierlichen Prozeß,
dadurch gekennzeichnet, daß das Material in einer ersten Stufe mit einer Temperatur von ca. 98 - 105°C in einen unter Druck stehenden ersten Behandlungsraum eingebracht und in diesem während einer Zeit von ca. 3,5 - 10 Min. bei Temperaturen von max. 135°C und einem Druck von max. 5 Bar verweilt, anschließend in einen zweiten Behandlungsraum auf einen Druck von 0,1
- 1,0 Bar entspannt und nach einer Verweilzeit von ca. 20 - 40 Sek. sowie einer Temperatur von unter 100°C aus der zweiten Behandlungsstufe abgezogen wird.

2. Verfahren nach Anspruch 1,
dadurch gekennzeichnet, daß die Temperatur und der Druck in der ersten Behandlungsstufe durch Direktdampf von ca. 6 - 12 Bar erzeugt werden.

3. Verfahren nach Anspruch 2,
dadurch gekennzeichnet, daß das material in der ersten Behandlungsstufe ständig bewegt ist.

4. Verfahren nach einem der Ansprüche 1 - 3,
dadurch gekennzeichnet, daß die Behandlung in erster und zweiter Stufe in einer Wasserdampfatmosphäre luft- bzw. sauerstofffrei erfolgt.

5. Verfahren nach Anspruch 4,
dadurch gekennzeichnet, daß die Wasserdampfatmosphäre in der zweiten Stufe durch Direktdampf von max. 3 Bar erhalten wird.

6. Verfahren nach einem der Ansprüche 1 - 5,
dadurch gekennzeichnet, daß der Druck in der ersten Behandlungszone zwischen 4,2 und 4,9 Bar beträgt.

7. Verfahren nach Anspruch 5,
dadurch gekennzeichnet, daß die Temperatur in der ersten Behandlungszone zwischen 131 und 134° C beträgt.

8. Verfahren nach Ansprüchen 6 oder 7,
dadurch gekennzeichnet, daß die Verweilzeit in der ersten Behandlungsstufe zwischen 4,5 und 6,5 Min. beträgt.

9. Verfahren nach Ansprüchen 1 - 8,
dadurch gekennzeichnet, daß ein zwischen der ersten und zweiten Behandlungsstufe wirkendes Förderelement unter den gleichen Druck- und Temperaturbedingungen wie die erste Behandlungszone selbst gehalten wird.

10. Anwendung des Verfahrens nach Ansprüchen 1 - 9 für die Qualitätsverbesserung von fett- und ölhaltigem Rohmaterial, insbes. Rapssaat, Baumwollsaat und Erdnüssen.

11. Anwendung des Verfahrens nach Ansprüchen 1 - 9 für die Qualitätsverbesserung von fett- und ölfreien Rückständen aus der Fett- und Ölgewinnung aus Rapssaat, Baumwollsaat und Erdnüssen.

12. Vorrichtung zur Durchführung des Verfahrens gemäß Ansprüchen 1 - 9, gekennzeichnet durch die kontinuierlich hintereinander angeordnete Reihenfolge von beheizbarem Vorratsbunker (1), Wiege- und Fördereinheit (3) mit Direktdampfeinspeisung (dd), Druckstufe (4) mit Hochdruck-Wasserdampfbeschickung (dhd), Förderaggregat (8) mit Direktdampfbeschickung (dd), zweite bzw. Entspannungsstufe (9) mit Direktdampfbeschickung (dd) und ebenfalls dampfbeschicktes (dd) Abzugs-Förderelement (10).

13. Vorrichtung gemäß Anspruch 12, gekennzeichnet durch eine erste Behandlungsstufe (4), die als vertikaler, mit beheizbaren Lochböden (5) und zentraler Welle mit Rührelementen (6) versehener Behälter ausgebildet ist, einem Förderaggregat (8) zwischen der ersten Stufe (4) und der zweiten Stufe (9), die in ihrem Aufbau demjenigen von (4) entspricht, oder als leerer Behälter mit Produktbewegung konstruiert ist, sowie Anschlüssen für Hochdruck-Wasserdampf (7) in die erste Verfahrensstufe (4) und dem verbindenden Förderaggregat (8) und Anschlüsse für Dampf von etwa 3 Bar zur Einstellung einer reinen Dampfatmosphäre in der gesamten Anlage (3´,9´´,9´).

14. Vorrichtung zur Durchführung des Verfahrens nach Ansprüchen 1 - 9, gekennzeichnet durch eine erste Behandlungsstufe (4), die als Expander ausgebildet ist.

15. Vorrichtung nach einem der Ansprüche 13 und 14,
dadurch gekennzeichnet, daß die Verbindung zwischen erster Behandlungsstufe (4) und zweiter bzw. Entspannungsstufe (9) als Expander (8) ausgebildet ist.

16. Vorrichtung nach Anspruch 15,
dadurch gekennzeichnet, daß die zweite Behandlungsstufe (9) über einen Abscheider (11) mit einem in (8) Vakuum erzeugenden Aggregat verbunden ist.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 647 484 (TAMOTSU YOKOTSUKA) * Anspruch 1; Spalte 3, Zeile 64 - Spalte 4, Zeile 73; Tabelle I * --- | 1-3,7,8 | A 23 P 1/14 A 23 L 1/211 A 23 K 1/14 |
| D,A | EP-A-0 212 391 (H. SCHUMACHER) * Anspruch 1; Seiten 12-13; Seiten 27,29,35,58; Figuren 5,6 * & DE-A-3 529 229 --- | 1-12,14 ,16 | |
| A | US-A-4 407 840 (P. LATHROP) * Ansprüche 1-3; Beispiel I * --- | 1,3 | |
| A | GB-A-1 144 466 (GENERAL FOODS) * Ansprüche 1,2; Figur * --- | 1-4 | |
| A | WO-A-8 606 256 (H. SCHAAF, NAHRUNGSMITTEL- EXTRUSIONSTECHNIK) --- | | |
| A | FR-A-1 313 377 (WENGER MANUFACTURING) --- | | |
| A | US-A-3 290 155 (G. MUSTAKAS) ----- | | RECHERCHIERTE SACHGEBIETE (Int. Cl.4) A 23 P A 23 L A 23 K C 11 B |

Der vorliegende Recherchenbericht wurde für alle Patentansprüche erstellt

| Recherchenort | Abschlußdatum der Recherche | Prüfer |
|---|---|---|
| DEN HAAG | 04-10-1988 | DESMEDT G.R.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument